# EUROPÄISCHE PATENTSCHRIFT

(11) **EP 3 298 663 B1**
(45) Veröffentlichungstag und Bekanntmachung des Hinweises auf die Patenterteilung: **01.07.2020**
(21) Anmeldenummer: 16716037.3
(22) Anmeldetag: 12.04.2016
(51) Int. Cl.: H01R 24/20, H01R 13/66, B62M 6/90, B62M 6/55, H01R 24/28, H01R 31/02, H01R 9/24

(54) **MODULARE STECKVERBINDUNGSANORDNUNG SOWIE ELEKTRISCH UND/ODER MIT MUSKELKRAFT ANTREIBBARES FAHRZEUG MIT MODULARER ENERGIEVERSORGUNG**
MODULAR CONNECTOR AND ELECTRICAL BICYCLE WITH MODULAR POWER GENERATION
CONNECTEUR MODULAIRE ET VÉLO ÉLECTRIQUE AVEC GÉNÉRATION D'ÉNERGIE MODULAIRE

(30) Priorität: 18.05.2015 DE 102015209029
(43) Veröffentlichungstag der Anmeldung: 28.03.2018
(73) Patentinhaber: Robert Bosch GmbH, 70442 Stuttgart (DE)
(72) Erfinder: SOBIG, Tim Sebastian, 72760 Reutlingen (DE); KIMMICH, Peter, 71144 Steinenbronn (DE)
(86) Internationale Anmeldenummer: PCT/EP2016/057977
(87) Internationale Veröffentlichungsnummer: WO 2016/184613

(56) Entgegenhaltungen:
- CN-Y- 2 251 526
- DE-U1- 20 009 528
- DE-U1- 20 009 528
- DE-U1-202007 002 366
- DE-U1-202007 002 366
- US-A1- 2013 244 463

## Beschreibung

### Stand der Technik

Die vorliegende Erfindung betrifft ein Elektrofahrrad mit einer modularen Energieversorgung.

In jüngster Zeit erfreuen sich insbesondere Elektrofahrräder immer größerer Beliebtheit. Zur Erhöhung einer Reichweite derartiger Elektrofahrräder werden kontinuierlich Verbesserungen an den Akkus vorgenommen, wie auch mehrere Akkus gleichzeitig am Elektrofahrrad verwendet. Bei der Verwendung mehrerer Akkus müssen diese jeweils einzeln mit einem elektrischen Antrieb verbunden werden. Dies kann zu einer Vielzahl von Kabelabzweigungen führen, wobei die Kabel häufig außen an einem Rahmen des Fahrzeugs geführt werden. Durch die Möglichkeit, mehrere Akkus an einem Elektrofahrrad vorzusehen, ergeben sich für die Fahrradhersteller jedoch Elektrofahrräder mit einer Vielzahl von Varianten. Dies wirkt sich jedoch nachteilig auf die Herstellungskosten aus. Weiterhin ergibt sich bei einer Vielzahl von Kabeln am Elektrofahrrad das Problem, dass Fahrer beim Aufsteigen oder Absteigen an den Kabeln hängenbleiben können. Auch ergeben sich zusätzliche Probleme hinsichtlich Dichtigkeit und Zuverlässigkeitsrisiken durch die Vielzahl von Kabeln.

Die Schrift DE 20 2007 002 366 U1 offenbart ein Fahrrad mit einem Elektromotor.

Die Schrift US 2013/0244463 A1 offenbart eine modulare elektrische Steckverbindung für Fahrräder. Die offenbarte modulare elektrische Steckverbindung ist zur Verbindung eines Computers oder Displays 50, eines USB Geräts 60 und/oder Schalters 42 vorgesehen. Das Fahrrad umfasst einen elektrische Kreis 65 mit einer Stromquelle 70.

Die Schrift DE 200 09 528 U1 offenbart eine Vorrichtung zum schnellen Verbinden von Lichtinstallationen.

Die Schrift CN 2251526 Y offenbart ein Elektrofahrrad.

### Offenbarung der Erfindung

Das erfindungsgemäße Elektrofahrrad ist in Anspruch 1 offenbart und weist demgegenüber den Vorteil auf, dass ein oder mehrere Akkus kostengünstig miteinander verbunden werden können. Auch ermöglicht die vorliegende Erfindung einen modularen Aufbau und somit eine vereinfachte Anschlussmöglichkeit, z.B. für unterschiedliche Fahrzeugtypen, so dass insbesondere die Herstellung mehrerer Varianten sehr kostengünstig realisiert werden kann. Dies wird erfindungsgemäß dadurch erreicht, dass eine modulare Steckverbindungsanordnung vorgesehen ist. Die modulare Steckverbindungsanordnung kann dabei an verschiedene Gegebenheiten angepasst werden. Die modulare Steckverbindungsanordnung umfasst einen Basisstecker und wenigstens einen Modulstecker mit einem Stecker und einer Steckeraufnahme. Der Basisstecker ist mit einer ersten Leitung verbunden und am ersten Modulstecker ist eine zweite Leitung, insbesondere zur Verbindung mit einem Akku, vorgesehen. Zwischen dem ersten Modulstecker und dem Basisstecker ist dabei eine erste Steckverbindung hergestellt. Somit kann ein modularer Aufbau durch Vorsehen von mehreren Modulsteckern vorgesehen werden, welche jeweils mit einem weiteren Akku verbindbar sind. Dadurch kann, z.B. ein Fahrzeughersteller, auf verschiedenste Anforderungen reagieren und Fahrzeuge mit unterschiedlichen elektrischen Reichweiten durch Vorsehen mehrerer Akkus realisieren.

Die Unteransprüche zeigen bevorzugte Weiterbildungen der Erfindung.

Gemäß der vorliegenden Erfindung weist die elektrische Verbindungsanordnung wenigstens ein elektrisches Widerstands-Bauelement auf. Hierdurch kann eine Widerstandsmessung in einer Leitung vorgenommen werden, so dass bei Vorhandensein von mehreren Akkus insbesondere auf eine Anzahl von Akkus geschlossen werden kann und weiter bevorzugt auch auf die Art von Akkus geschlossen werden. Hierdurch kann ein verbessertes Batteriemanagement durchgeführt werden. Das Batteriemanagement betrifft bevorzugt Ladestrategien zum Aufladen mehrerer Akkus sowie auch Entladestrategien zum Entladen mehrerer Akkus. Weiter bevorzugt können auch gezielt einzelne oder mehrere Akkus von Lade- und Entladestrategien ausgeklammert werden. Ferner kann auf einfache Weise bestimmt werden, welcher Akku gerade aktiv ist, d.h., wo wird Energie entnommen bzw. wo erfolgt eine Aufladung.

Das elektrische Widerstands-Bauelement ist dabei bevorzugt in der ersten Leitung und/oder in der zweiten Leitung und/oder in den Modulstecker und/oder in den Basisstecker integriert.

Weiter umfasst das Fahrzeug eine Steuereinheit, welche eingerichtet ist, Signale von elektrischen Widerstands-Bauelementen zu erfassen und basierend auf den elektrischen Signalen der Widerstands-Bauelemente eine vorbestimmte Ladestrategie zum Laden eines oder mehrerer Akkus und/oder eine vorbestimmte Entladestrategie zum Entladen eines oder mehrerer Akkus auszuführen.

Die Steuereinheit ist weiter eingerichtet, bei Vorhandensein einer Vielzahl von Akkus einzelne Akkus von einer Aufladung und/oder Entladung auszunehmen.

Gemäß einer weiteren bevorzugten Ausgestaltung der Erfindung ist die Steuereinheit eingerichtet, basierend auf Signalen von elektrischen Widerstands-Bauelementen auf eine Anzahl und/oder eine Art von Akkus Rückschlüsse zu ziehen.

Hierdurch kann ein Hersteller von Elektrofahrrädern einen modularen Aufbau des elektrischen Versorgungssystems realisieren, so dass die Kosten für die Elektrifizierung des Fahrrads signifikant reduziert werden können. Besonders bevorzugt sind der Basisstecker und einer oder mehrere Modulstecker dabei in einem Rahmenrohr des Elektrofahrrads angeordnet, insbesondere im Sitzrohr. Dadurch können auch kurze Leitungen zum elektrischen Antrieb realisiert werden, insbesondere, wenn der elektrische Antrieb vorzugsweise ein Mittelmotorantrieb ist, welcher im Bereich des Kurbeltriebs angeordnet ist.

### Zeichnung

Nachfolgend werden Ausführungsbeispiele der Erfindung unter Bezugnahme auf die begleitende Zeichnung im Detail beschrieben. Gleiche bzw. funktional gleiche Teile sind mit den gleichen Bezugszeichen bezeichnet. In der Zeichnung ist:
- Figur 1: eine schematische Ansicht eines Elektrofahrrads gemäß einem ersten Ausführungsbeispiel,
- Figur 2: eine schematische Darstellung einer elektrischen Ausrüstung des Elektrofahrrads von Figur 1,
- Figur 3: eine schematische Schnittansicht eines montierten Steckers, und
- Figur 4: eine schematische Darstellung einer elektrischen Ausrüstung gemäß einem zweiten Ausführungsbeispiel der Erfindung.

### Bevorzugte Ausführungsformen der Erfindung

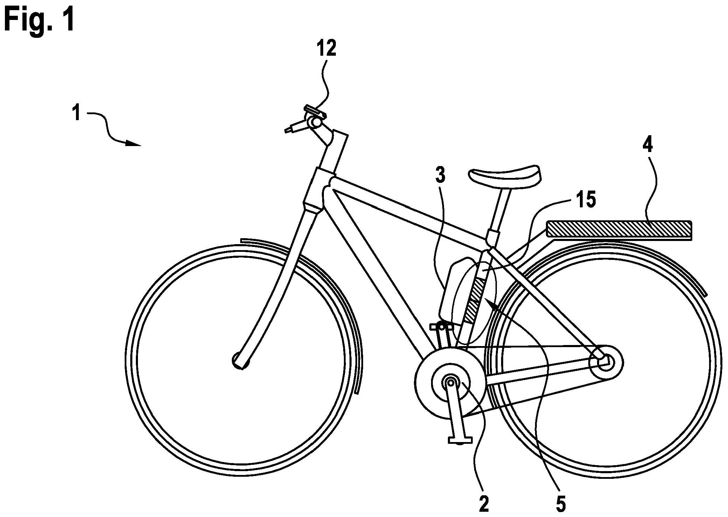

Nachfolgend wird unter Bezugnahme auf die Figuren 1 bis 3 ein Elektrofahrrad 1 gemäß einem ersten Ausführungsbeispiel der Erfindung im Detail beschrieben.

Wie aus Figur 1 ersichtlich ist, umfasst das Elektrofahrrad 1 einen elektrischen Antrieb 2, welcher im Bereich einer Kurbelwelle des Elektrofahrrads angeordnet ist (Mittelmotoranordnung).

Das Elektrofahrrad 1 umfasst ferner einen ersten Akku 3, welcher an einem Sitzrohr 15 des Elektrofahrrads angeordnet ist, sowie einen zweiten Akku 4, welcher an einem Gepäckträger des Elektrofahrrads angeordnet ist.

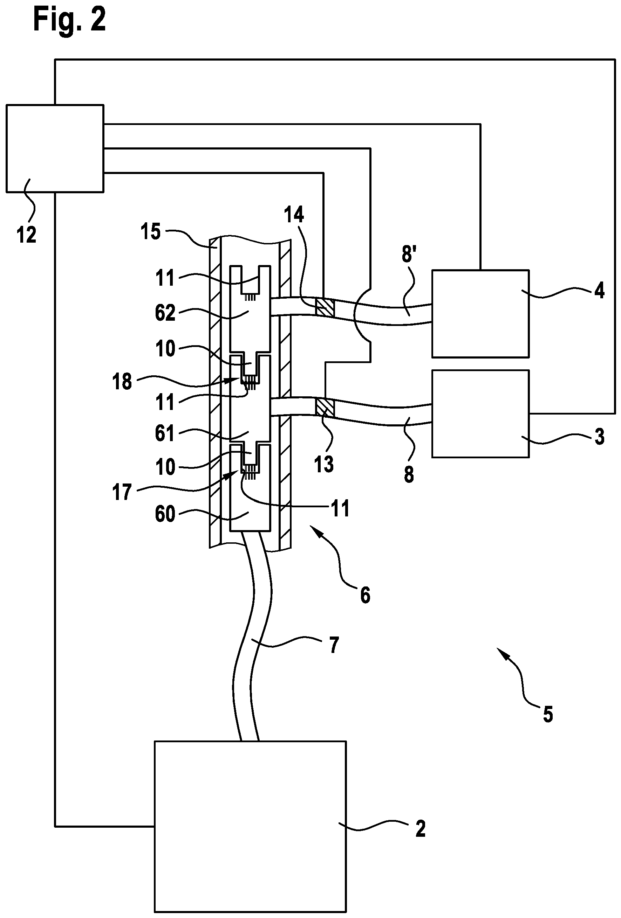

Zwischen dem elektrischen Antrieb 2 und den beiden Akkus 3, 4 ist eine elektrische Verbindungsanordnung 5 vorgesehen, welche im Detail aus Figur 2 ersichtlich ist. Die elektrische Verbindungsanordnung 5 umfasst eine modulare Steckverbindungsanordnung 6 und eine erste Leitung 7, welche den elektrischen Antrieb 2 mit der elektrischen Steckverbindungsanordnung 6 verbindet. Ferner sind mehrere zweite Leitungen 8, 8' vorgesehen, welche die Steckverbindungsanordnung 6 mit dem ersten Akku 3 und dem zweiten Akku 4 verbinden.

Wie insbesondere aus Figur 2 ersichtlich ist, umfasst die Steckverbindungsanordnung 6 einen Basisstecker 60, welcher an einem freien Ende der ersten Leitung 7 angeordnet ist. Ferner ist ein erster Modulstecker 61 und ein zweiter Modulstecker 62 vorgesehen. Der erste Modulstecker 61 ist in den Basisstecker 60 gesteckt, um eine erste Steckverbindung 17 bereitzustellen, und der zweite Modulstecker 62 steckt im ersten Modulstecker 61, um eine zweite Steckverbindung 18 bereitzustellen.

Der Basisstecker 60 umfasst eine Aufnahme 11, um einen Stecker 10 des ersten Modulsteckers 61 aufzunehmen. Am ersten Modulstecker 61 ist ferner noch ebenfalls eine Aufnahme 11 vorgesehen. Hierbei ist der Stecker 10 des zweiten Modulsteckers 62 in die Aufnahme 11 des ersten Modulsteckers 61 aufgenommen. Vom ersten Modulstecker 61 geht eine Leitung 8 zum ersten Akku 3 ab und vom zweiten Modulstecker 62 geht eine Leitung 8' zum zweiten Akku 4 ab. Die Stecker 10 und Aufnahmen 11 sind jeweils zueinander passend und geometrisch gleich ausgebildet.

Eine Aufnahme 11 des zweiten Modulsteckers 62 ist in diesem Ausführungsbeispiel frei. Hierbei wäre es möglich, noch einen weiteren dritten Modulstecker einzustecken und dabei einen weiteren Akku anzuschließen.

Das Bezugszeichen 12 bezeichnet eine Steuereinheit 12, welche mit dem elektrischen Antrieb 2 sowie dem ersten Akku 3 und dem zweiten Akku 4 verbunden ist.

Ferner ist die Steuereinheit 12 mit einem ersten elektrischen Widerstands-Bauelement 13 und einem zweiten elektrischen Widerstands-Bauelement 14 verbunden. Das erste elektrische Widerstands-Bauelement 13 ist in der zweiten Leitung 8 zwischen dem ersten Modulstecker 61 und dem ersten Akku 3 angeordnet. Das zweite elektrische Widerstands-Bauelement 14 ist der Leitung 8' zwischen dem zweiten Modulstecker 62 und dem zweiten Akku 4 angeordnet.

Durch das Vorsehen der elektrischen Widerstands-Bauelemente 13, 14 ist es möglich, dass die Steuereinheit 12 neben der Anzahl und der Art der Akkus 3, 4 auch eine vorbestimmte Ansteuerung der beiden Akkus 3, 4 vornehmen kann. Die Steuereinheit 12 ist dabei eingerichtet, eine Entladestrategie für die Mehrzahl von Akkus 3, 4 auszuführen. Ebenfalls ist die Steuereinheit 12 eingerichtet, eine Ladestrategie für die beiden Akkus 3, 4 auszuführen. Hierbei können beispielsweise beide Akkus gleichzeitig mit gleicher Stärke geladen werden oder die Akkus werden nacheinander geladen, wobei zuerst der erste Akku 3 vollgeladen werden muss, bis der zweite Akku 4 geladen wird. Auch ist es beispielsweise möglich, dass die Steuereinheit 12 eingerichtet ist, gezielt einzelne Akkus von einem Aufladen oder Entladen auszuklammern. Auch kann mittels der Widerstands-Bauelemente 13, 14 bestimmt werden, welcher Akku gerade aktiv ist, z.B. geladen wird, oder von welchem Energie abgenommen wird.

Die Modulstecker 61, 62 sind weiterhin derart ausgebildet, dass an einem Mantelbereich eine Ausnehmung 65 vorgesehen ist. In diese Ausnehmung 65 können ein oder mehrere Kabel in Längsrichtung der Modulstecker verlaufen. In diesem Ausführungsbeispiel ist in der Ausnehmung 65 die erste Leitung 8 kurz parallel zum Modulstecker 61 geführt, bevor diese durch eine Öffnung im Sitzrohr 15 aus dem Sitzrohr 15 herausgeführt wird. Somit entsteht zwischen dem Sitzrohr 15 und den Modulsteckern ein Hohlraum 16, welcher auch mehrere parallel verlaufende Kabel aufnehmen kann.

Durch die Anordnung der Modulstecker 61, 62 im Sitzrohr 15, sind diese somit von außen nicht sichtbar. Somit sind die Modulstecker und auch insbesondere die vollständige Steckerverbindungsanordnung 6 vor Beschädigungen durch einen Fahrer beim Aufsteigen und/oder Absteigen auf das Elektrofahrrad 1 geschützt. Dadurch kann insbesondere die Zuverlässigkeit der elektrischen Steckverbindungsanordnung verbessert werden. Auch gibt es weniger Probleme mit Feuchtigkeit oder Vandalismus. Ferner ergeben sich optische Vorteile.

Somit weist die vorliegende Erfindung einen modularen Aufbau auf, so dass ein Fahrradhersteller mehrere verschiedene Varianten von Elektrofahrrädern mit einer unterschiedlichen Anzahl von Akkus einfach realisieren kann, indem lediglich ein zusätzlicher Modulstecker auf die bereits vorhandenen Modulstecker aufgesteckt wird. Dadurch kann ein Anschließen weiterer Akkus deutlich vereinfacht werden. Auch ist es möglich, bei bestehenden Elektrofahrrädern beispielsweise eine Nachrüstung mit einem zusätzlichen Akku, vorzunehmen, ohne dass große Umbaumaßnahmen notwendig sind.

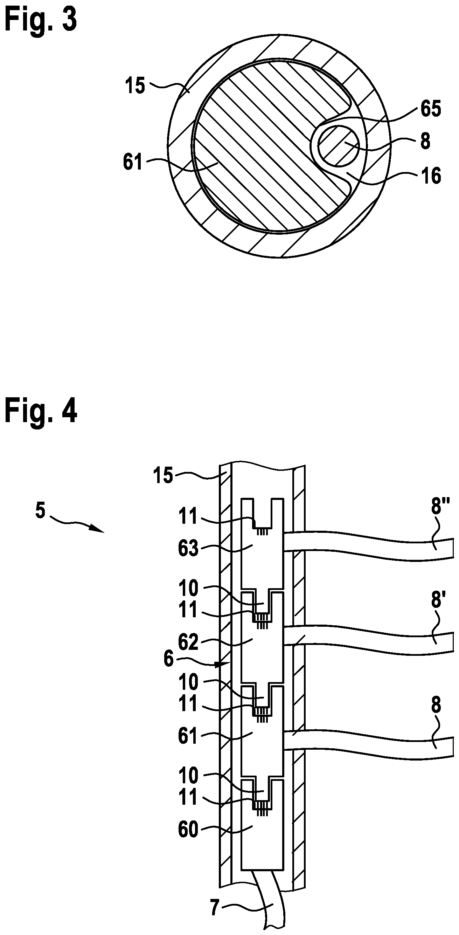

Figur 4 zeigt ein zweites Ausführungsbeispiel mit drei Akkus, wobei drei Modulstecker 61, 62, 63 vorgesehen sind. Hierbei geht jeweils eine Leitung 8 bzw. 8' bzw. 8" von jeweils einem Modulstecker zu einem Akku ab. In die freie Aufnahme 11 des dritten Modulsteckers 63 könnte theoretisch ein weiterer Modulstecker eingesteckt werden.

Zu den beschriebenen Ausführungsbeispielen sei angemerkt, dass statt Akkus selbstverständlich auch weitere Verbraucher an eine freie Aufnahme 11 eines Modulsteckers eingesteckt werden können. Ein weiterer Verbraucher ist beispielsweise ein Display am Lenker oder eine Fahrradlampe. Somit können verschiedene Variationen von Elektrofahrrädern mit unterschiedlichen elektrischen, zusätzlichen Verbrauchern ebenfalls auf einfache Weise realisiert werden.

## Patentansprüche

1. Elektrofahrrad, umfassend:
- einen elektrischen Antrieb (2),
- wenigstens einen ersten Akku (3),
- eine elektrische Verbindungsanordnung (5) zwischen dem elektrischen Antrieb (2) und dem ersten Akku (3) mit einer modularen Steckverbindungsanordnung (6), wobei die modulare Steckverbindungsanordnung (6) mindestens folgende Komponenten aufweist:
• einen mit einer ersten Leitung (7) verbundenen Basisstecker, und
• einen ersten Modulstecker (61) mit einem Stecker (10) und einer Aufnahme (11), eingerichtet zum Aufnehmen eines Steckers eines zweiten Modulsteckers (62),
• wobei am ersten Modulstecker (61) eine zweite Leitung (8)zur Verbindung mit dem ersten Akku (3) vorgesehen ist, und
• wobei zwischen dem ersten Modulstecker (61) und dem Basisstecker (60) eine erste Steckverbindung (17) hergestellt ist, und
- einen zweiten Akku (4) und den zweiten Modulstecker (62), welcher mit dem zweiten Akku (4) elektrisch verbunden ist, wobei zwischen dem zweiten Modulstecker (62) und dem ersten Modulstecker (61) eine zweite Steckverbindung hergestellt ist, wobei:
- die elektrische Verbindungsanordnung (5) wenigstens ein elektrisches Widerstands-Bauelement (13, 14) aufweist, wobei das elektrische Widerstands-Bauelement (13, 14) im Modulstecker (61, 62) angeordnet ist, und
- das Elektrofahrrad eine Steuereinheit (12) umfasst, welche eingerichtet ist, Signale des elektrischen Widerstands-Bauelements (13, 14) zu erfassen, und basierend auf den Signalen des elektrischen Widerstands-Bauelements (13, 14) eine Aufladestrategie zum Laden des Akkus (3, 4) oder eine Entladestrategie zum Entladen des Akkus (3, 4) auszuführen, wobei die Steuereinheit (12) eingerichtet ist, basierend auf Signalen des elektrischen Widerstands (13, 14) eine Anzahl von Akkus und/oder eine Art von Akkus zu bestimmen.

2. Elektrofahrrad nach Anspruch 1, **dadurch gekennzeichnet, dass** ein gemeinsames Gehäuse, in welchem der Basisstecker (60) und der erste Modulstecker (61) angeordnet sind, ein Rohr, insbesondere ein Sitzrohr (15) eines Elektrofahrrads, ist.

3. Elektrofahrrad nach Anspruch 2, **dadurch gekennzeichnet, dass** das Gehäuse eine Öffnung zur Durchführung der zweiten Leitung (8) vom Modulstecker (61, 62) zu einem Akku (3, 4) aufweist.

4. Elektrofahrrad nach einem der vorhergehenden Ansprüche, **dadurch gekennzeichnet, dass** das elektrische Widerstands-Bauelement (13, 14) in der ersten Leitung (7) und/oder in der zweiten Leitung (8) angeordnet ist.

5. Elektrofahrrad nach einem der vorhergehenden Ansprüche, **dadurch gekennzeichnet, dass** das elektrische Widerstands-Bauelement (13, 14) im Basisstecker (60) angeordnet ist.

6. Elektrofahrrad nach einem der vorhergehenden Ansprüche, **dadurch gekennzeichnet, dass** die Steuereinheit (12) eingerichtet ist, bei Vorhandensein einer Vielzahl von Akkus (3, 4) einzelne Akkus von einer elektrischen Aufladung und/oder von einer elektrischen Entladung auszunehmen.

7. Elektrofahrrad nach einem der vorhergehenden Ansprüche, **dadurch gekennzeichnet, dass** der erste Modulstecker (61) eine Ausnehmung (65) an einem Mantelbereich aufweist, wobei die Ausnehmung (65) eingerichtet ist, ein oder mehrere Kabel in Längsrichtung des Modulstecker zu führen um eine Kabeldurchführung zu ermöglichen.

## Claims

1. Electric bicycle, comprising:
- an electric drive (2),
- at least one first battery (3),
- an electrical connection arrangement (5) between the electric drive (2) and the first battery (3), having a modular plug connection arrangement (6), wherein the modular plug connection arrangement (6) has at least the following components:
• a base plug connected to a first line (7), and
• a first module plug (61) having a plug (10) and a socket (11), configured so as to receive a plug of a second module plug (62),
• wherein a second line (8) for connection to the first battery (3) is provided on the first module plug (61), and
• wherein a first plug connection (17) is established between the first module plug (61) and the base plug (60), and
- a second battery (4) and the second module plug (62), which is electrically connected to the second battery (4), wherein a second plug connection is established between the second module plug (62) and the first module plug (61),
wherein
- the electrical connection arrangement (5) has at least one electrical resistor component (13, 14), wherein the electrical resistor component (13, 14) is arranged in the module plug (61, 62), and
- the electric bicycle comprises a control unit (12) that is configured so as to record signals from the electrical resistor component (13, 14) and to execute a charging strategy for charging the battery (3, 4) or a discharging strategy for discharging the battery (3, 4) based on the signals from the electrical resistor component (13, 14), wherein the control unit (12) is configured so as to determine a number of batteries and/or a type of batteries based on signals from the electrical resistor (13, 14).

2. Electric bicycle according to Claim 1, **characterized in that** a common housing in which the base plug (60) and the first module plug (61) are arranged is a tube, in particular a seat tube (15) of an electric bicycle.

3. Electric bicycle according to Claim 2, **characterized in that** the housing has an opening for passing through the second line (8) from the module plug (61, 62) to a battery (3, 4).

4. Electric bicycle according to one of the preceding claims, **characterized in that** the electrical resistor component (13, 14) is arranged in the first line (7) and/or in the second line (8).

5. Electric bicycle according to one of the preceding claims, **characterized in that** the electrical resistor component (13, 14) is arranged in the base plug (60).

6. Electric bicycle according to one of the preceding claims, **characterized in that** the control unit (12) is configured so as to exclude individual batteries from an electrical charging operation and/or from an electrical discharging operation when a multiplicity of batteries (3, 4) are present.

7. Electric bicycle according to one of the preceding claims, **characterized in that** the first module plug (61) has a recess (65) on a cover area, wherein the recess (65) is configured so as to guide one or more cables in the longitudinal direction of the module plug in order to allow a cable to be passed through.

## Revendications

1. Bicyclette électrique, comprenant :
- un mécanisme d'entraînement électrique (2),
- au moins un accumulateur (3),
- un arrangement de connexion électrique (5) entre le mécanisme d'entraînement électrique (2) et le premier accumulateur (3) comprenant un arrangement de connexion par enfichage modulaire (6), l'arrangement de connexion par enfichage modulaire (6) possédant au moins les composants suivants :
• une fiche de base reliée à un premier câble (7) et
• une première fiche de module (61) pourvue d'une fiche (10) et d'un logement (11), conçu pour accueillir une fiche d'une deuxième fiche de module (62),
• un deuxième câble (8) servant à la connexion au premier accumulateur (3) se trouvant sur la première fiche de module (61) et
• une première connexion par enfichage (17) étant établie entre la première fiche de module (61) et la fiche de base (60), et
- un deuxième accumulateur (4) et la deuxième fiche de module (62), laquelle est reliée électriquement au deuxième accumulateur (4), une deuxième connexion par enfichage étant établie entre la deuxième fiche de module (62) et la première fiche de module (61),
- l'arrangement de connexion électrique (5) possédant au moins un composant résistif électrique (13, 14), le composant résistif électrique (13, 14) étant disposé dans la fiche de module (61, 62), et
- la bicyclette électrique comportant une unité de commande (12) qui est conçue pour détecter des signaux du composant résistif électrique (13, 14) et, en se basant sur les signaux du composant résistif électrique (13, 14), mettre en œuvre une stratégie de charge en vue de charger l'accumulateur (3, 4) ou une stratégie de décharge en vue de décharger l'accumulateur (3, 4), l'unité de commande (12) étant conçue pour déterminer un nombre d'accumulateurs et/ou un type d'accumulateur en se basant sur les signaux de la résistance électrique (13, 14).

2. Bicyclette électrique selon la revendication 1, **caractérisée en ce qu'**un boîtier commun dans lequel sont disposées la fiche de base (60) et la première fiche de module (61) est un tube, notamment un tube de selle (15) de la bicyclette électrique.

3. Bicyclette électrique selon la revendication 2, **caractérisée en ce que** le boîtier possède une ouverture destinée au passage du deuxième câble (8) de la fiche de module (61, 62)à un accumulateur (3, 4).

4. Bicyclette électrique selon l'une des revendications précédentes, **caractérisée en ce que** le composant résistif électrique (13, 14) est disposé dans le premier câble (7) et/ou dans le deuxième câble (8).

5. Bicyclette électrique selon l'une des revendications précédentes, **caractérisée en ce que** le composant résistif électrique (13, 14) est disposé dans la fiche de base (60).

6. Bicyclette électrique selon l'une des revendications précédentes, **caractérisée en ce que** l'unité de commande (12) est conçue pour, en présence d'une pluralité d'accumulateurs (3, 4), exclure des accumulateurs individuels d'une charge électrique et/ou d'une décharge électrique.

7. Bicyclette électrique selon l'une des revendications précédentes, **caractérisée en ce que** la première fiche de module (61) possède un creux (65) au niveau d'une zone d'enveloppe, le creux (65) étant conçu pour guider un ou plusieurs câbles dans la direction longitudinale de la fiche de module afin de rendre possible une traversée de câbles.
